# EUROPÄISCHE PATENTSCHRIFT

(11) **EP 1 086 867 B1**
(45) Veröffentlichungstag und Bekanntmachung des Hinweises auf die Patenterteilung: **04.10.2006**
(21) Anmeldenummer: 00119369.7
(22) Anmeldetag: 11.09.2000
(51) Int. Cl.: B60T 8/34, B60T 17/08, B60T 8/40, B60T 8/50, B60T 13/74, F16D 65/14

(54) **Verfahren zur Steuerung eines Bremsvorgangs und fluidgesteuerte Fahrzeugbremse**
Method for controlling a braking sequence and a fluid controlled vehicle brake
Méthode pour commander le processus de freinage et frein de véhicule à commande fluidique

(30) Priorität: 23.09.1999 DE 19945704
(43) Veröffentlichungstag der Anmeldung: 28.03.2001
(73) Patentinhaber: KNORR-BREMSE SYSTEME FÜR NUTZFAHRZEUGE GMBH, 80809 München (DE)
(72) Erfinder: Herges, Michael, 70825 Korntal-Münchingen (DE); Röther, Friedbert, 74389 Cleebronn (DE)

(56) Entgegenhaltungen:
- EP-A- 0 206 356
- WO-A-99/38744
- DE-B- 1 161 942
- US-A- 3 980 348
- US-A- 4 575 159

## Beschreibung

Die Erfindung betrifft ein Verfahren zur Steuerung eines Bremsvorgangs und eine fluidgesteuerte Fahrzeugbremse gemäß dem Oberbegriff des Anspruchs 1 und des Anspruchs 3.

Derartige Fahrzeugbremsen werden insbesondere im Nutzfahrzeugbereich eingesetzt, wobei diese in der Regel pneumatisch gesteuert werden. Zur Einleitung eines Bremsvorgangs wird hierbei eine Betätigungseinrichtung wie z. B. ein Bremspedal durch den Benutzer gedrückt. Diese Betätigungseinrichtung wirkt mit einem Bremszylinder derart zusammen, dass der Kolben dieses Bremszylinders auf eine Bremsvorrichtung wie eine Radbremse einwirkt. Der Bremszylinder weist hierzu eine druckseitige Kammer und eine druckabgewandte Kammer auf, welche durch den Kolben voneinander getrennt sind. Hierbei ist der Kolben in der Regel derart durch eine Federelririchtung vorgespannt, dass die Bremse gelöst ist, wenn die druckseitige Kammer nicht mit einem Druck beaufschlagt ist. Wird dagegen das Bremspedal betätigt, so tritt Druckluft in die druckseitige Kammer ein, wodurch der Kolben des Bremszylinders derart verschoben wird, dass auf die Radbremse ein vorbestimmtes Bremsmoment aufgebracht wird. Zum Lösen wird die Druckseite des Bremszylinders entlüftet, was in der Regel über ein Stellglied wie ein Fußbremsventil, Relaisventil, Drucksteuerventil oder Druckregelmodul und/oder einen Schalldämpfer geschieht.

Derartige Fahrzeugbremsen werden nun aufgrund der gestiegenen Anforderungen an die Fahrzeugsicherheit zunehmend an ABS-, ASR- und/oder ESP-Systemen angewandt. Damit diese Systeme richtig funktionieren können, ist es von Bedeutung, dass das Bremsmoment z. B. im Falle eines Einbruchs der Raddrehzahl sehr schnell sinkt. Dies konnte mit den bisher bekannten Fahrzeugbremssystemen aufgrund ihrer Trägheit nur bedingt erreicht werden.

Bei einer bekannten Fahrzeugbremse gemäß der WO 99 387 44 A wird zum Lösen der Bremse Druckmittel aus der druckseitigen Kammer in die druckabgewandte Kammer des Bremszylinders eingeleitet, um die Lösebewegung einer mit einem Bremsbetätigungsorgan verbundenen Membran zu unterstützen. Jedoch läuft der hierdurch in der druckabgewandten Kammer aufgebaute Druck einem schnellen Druckabbau in der druckseitigen Kammer zuwider, da er diesen zumindest in der Endphase des Druckausgleichs zwischen beiden Kammern verlangsamt. Bei der bekannten Fahrzeugbremse ist deshalb die druckabgewandte Kammer mittels eines Absperr- oder Überdruckventils (check valve) in die Umgebung (Drucksenke) entlüftbar, falls der Druck in dieser Kammer einen bestimmten Wert überschreitet. Aufgrund der solchen Überdruckventilen eigenen Trägheit ist jedoch von einer geringen Dynamik auszugehen, so dass zu vermuten ist, dass der Druckabbau in der druckseitigen Kammer relativ langsam stattfindet.

Das Dokument DE 11 61 942 B offenbart ebenfalls eine Bremseinrichtung, bei welcher zur Verhinderung von Gleiten während eines Bremsvorgangs ein schneller Abbau des Drucks in der druckseitigen Kammer dadurch erzielt werden soll, dass diese mit der druckabgewandten Kammer verbunden und gleichzeitig, ein in sich geschlossenes Volumen bildend, die zuvor bestehende Strömungsverbindung zwischen ihr und der Umgebung unterbrochen wird.

Die EP 0 206 356 A2 offenbart eine Druckluftanlage für Nutzfahrzeuge, bei welcher die aus der druckseitigen Kammer eines Bremszylinders stammende Abluft über einen Schalldämpfer einer Brennkraftmaschine abgeleitet wird.

Gemäß der gattungsbildenden US-A-3 980 348 schafft im Gleitfall ein Ventil eine Strömungsverbindung zwischen einer druckabgewandten Kammer und einer druckseitigen Kammer des Bremszylinders.

Der vorliegenden Erfindung liegt die Aufgabe zugrunde, eine Fahrzeugbremse bzw. ein Verfahren der eingangs erwähnten Art derart weiterzubilden, dass die Geschwindigkeit beim Absenken des Bremsmoments erhöht wird.

Erfindungsgemäß wird diese Aufgabe durch die kennzeichnenden Merkmale der Ansprüche 1 und 3 gelöst.

So ist vorgesehen, dass das Fluid aus der druckseitigen Kammer in die druckabgewandte Kammer geführt und von dort gedrosselt aus dem Bremszylinder abgeleitet wird. Die mit der Drosseleinrichtung erzielbaren Vorteile sind insbesondere darin zu sehen, dass einerseits in der druckabgewandten Kammer des Bremszylinders ein gezielt einstellbarer Staudruck bereitgestellt werden kann, der das Zurückbewegen des Kolbens des Bremszylinders in die Löserstellung wesentlich unterstützt und beschleunigt. Damit wird erreicht, dass die der Radbremsbetätigungskraft entgegen wirkende Kraft wesentlich erhöht werden kann, da sich die aus dem Staudruck resultierende Kraftkomponente zur Vorspannkraft der Feder am Kolben hinzu addiert. Zudem strömt das Fluid aufgrund des vorliegenden Drucks in der druckseitigen Kammer in sehr kurzer Zeit auf die druckabgewandte Seite des Bremszylinders. Daher beschleunigt sich das Löseverhalten des Bremszylinders wesentlich.

Andererseits kann mittels der stets bestehenden Strömungsverbindung zwischen der druckabgewandten Kammer und der Umgebung Fluid aus der druckabgewandten Kammer abströmen. Insbesondere lässt sich das Ansprechverhalten des Kolbens des Bremszylinders durch eine entsprechende Dimensionierung der Drosselstelle gezielt einstellen. Damit erlaubt die erfindungsgemäße Fahrzeugbremse mit einfachen Mitteln eine Anpassung an am Fahrzeug vorgesehene ABS-, ASR- und/oder ESP-Systeme. Die Funktionalität des Bremssystems und somit die Zuverlässigkeit an Sicherheit des Gesamtsystems verbessert sich dadurch wesentlich.

Von weiterem Vorteil ist hierbei, dass keine zusätzliche Energiequelle erforderlich ist, um diesen Effekt zu erzielen. So wird erfindungsgemäß die für den Bremsdruckaufbau genutzte Energie, welche während der Bremsung sozusagen in der druckseitigen Kammer gespeichert ist, ein weiteres Mal genutzt.

Vorteilhaft ist ferner, dass sich die erfindungsgemäße Fahrzeugbremse durch sehr geringen baulichen Aufwand realisieren lässt. Daher lässt sich eine derartige Fahrzeugbremse kostengünstig bereitstellen und zeichnet sich durch eine hohe Zuverlässigkeit aus. Zudem ist auch eine Nachrüstung an bestehenden Systemen möglich.

Erfindungsgemäß wird das Fluid über einen die Drosselwirkung ausübenden Schalldämpfer aus der druckabgewandten Kammer des Bremszylinders abgeleitet. Dies hat den wesentlichen Vorteil, dass sich eine verbesserte schalldämpfende Wirkung ergibt. Weiterhin entsteht in der druckabgewandten Kammer ein Staudruck. Die durch diesen Staudruck auf den Kolben ausgeübte Kraft addiert sich hierbei zur Vorspannkraft des Kolbens, wodurch das Lösen der Bremse unterstützt wird. Dadurch kann das durch den Bremszylinder bereitgestellte Bremsmoment sehr schnell abgesenkt werden, was insbesondere im Falle eines Einbruchs der Raddrehzahl gewünscht ist.

Vorteilhafte Weiterbildungen der Erfindung ergeben sich aus den Unteransprüchen.

Von weiterem Vorteil ist, wenn das Fluid über ein Stellglied in die druckabgewandte Kammer des Bremszylinders geleitet wird. Damit kann der Fluid durch-fluss und somit der Gegendruckaufbau in der druckabgewandten Kammer noch besser gesteuert werden. Die Anpassungsfähigkeit der Fahrzeugbremse an ABS-, ASR-und/oder ESP-Systeme verbessert sich dadurch weiter. Das Stellglied kann hierbei z. B. als Fußbrems-, Relais-, Drucksteuerventil oder Druckregelmodul ausgebildet sein.

Die Erfindung wird nachfolgend in einem Ausführungsbeispiel anhand einer Figur erläutert, welche das Wesen der Erfindung schematisch darstellt.

Gemäß der Darstellung in dieser Figur weist eine Fahrzeugbremse 1 einen Bremszylinder 2, ein Stellglied 3 und einen Schalldämpfer 4 auf. Der Bremszylinder 2 enthält hierbei eine druckseitige Kammer 21 und eine druckabgewandte Kammer 22, welche durch einen Kolben 23 voneinander getrennt sind.

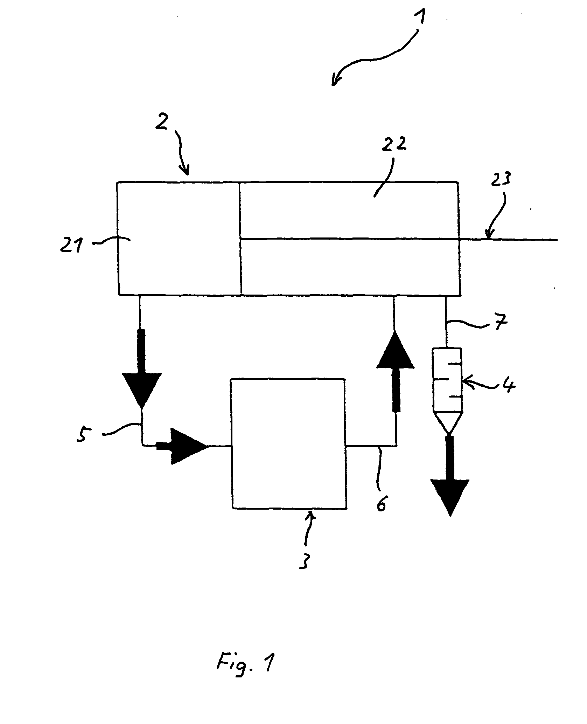

Die Fahrzeugbremse 1 umfasst ferner eine hier nicht dargestellte Betätigungseinrichtung wie ein Bremspedal, welche bei einer Aktivierung das Einströmen von Druckluft in die druckseitige Kammer 21 des Bremszylinders 2 bewirkt. Daher baut sich in der druckseitigen Kammer 21 zur Einleitung eines Bremsvorgangs ein Druck auf, der den Kolben 23 gemäß der Darstellung in Fig. 1 nach rechts drückt. Dies geschieht gegen eine federnde Vorspannung, die den Kolben 23 in die Lösestellung der Bremse vorspannt. Die hierzu vorgesehenen Mittel sind an sich bekannt und werden daher hier nicht näher erläutert. Der Kolben 23 ist ferner mit einer hier nicht dargestellten Radbremse verbunden und wirkt auf diese bei beaufschlagten Luftdruck derart ein, daß ein Bremsmoment auf ein Rad übertragen wird.

Ein derartiger Bremszylinder 2 kann einmal zentral im Fahrzeug angeordnet oder jeweils auch für einzelne Achsen oder alle Räder des Fahrzeugs vorgesehen sein.

Beim Lösen der Bremse veranlaßt das Stellglied 3 eine Ableitung der Druckluft aus der druckseitigen Kammer 21 über eine erste und zweite Leitung 5 und 6 zur Seite der druckabgewandten Kammer 22. Von dort wird die Druckluft über eine Ableitung 7 und den Schalldämpfer 4 in die Umgebung abgegeben. Die Pfeile in der Figur geben dabei die Richtung der Luftführung an.

Da der Schalldämpfer 4 nicht nur eine schalldämpfende Wirkung, sondern auch einen drosselnden Effekt bei der Hindurchführung der Druckluft herstellt, entsteht in der druckabgewandten Kammer 22 ein Staudruck. Die durch diesen Staudruck auf den Kolben 23 ausgeübte Kraft addiert sich hierbei zur Vorspannkraft des Kolbens 23, wodurch das Lösen der Bremse wesentlich unterstützt wird. Dadurch kann das durch den Bremszylinder 2 bereitgestellte Bremsmoment sehr schnell abgesenkt werden, was insbesondere im Falle eines Einbruchs der Raddrehzahl gewünscht ist. Damit kann das Blockieren eines Rades zuverlässiger vermieden werden.

Die Erfindung läßt neben der hier aufgezeigten Ausführungsform weitere Gestaltungsansätze zu.

So kann nicht erfindungsgemäß auf den Schalldämpfer 4 gänzlich verzichtet werden, da auch die Hindurchführung der Druckluft durch die druckabgewandte Kammer 22 bereits eine schalldämpfende Wirkung herstellt. Zur Erzielung der Drosselwirkung kann dann eine Ventileinrichtung im Bereich der Ableitung 7 angeordnet werden, oder der Übergang von der druckabgewandten Kammer 22 zur Ableitung 7 wird als eine derartige Engstelle ausgebildet, daß die gewünschte Drosselung des Luftstromes erzielt wird.

Das Stellglied 3 kann als komplexes Element ausgebildet sein, welches eine Steuerung der hindurch tretenden Luftmenge oder des zeitlichen Verlaufs des Luftdurchtritts ermöglicht oder auch als einfaches Ventil, welches lediglich den Luftdurchtritt ermöglicht oder sperrt.

Die Fahrzeugbremse 1 kann auch mit einem anderen Fluid als Druckluft betrieben werden. So ist bei entsprechender Anpassung der Bestandteile auch ein Betrieb mit einem Hydraulikfluid möglich, ohne daß vom Grundprinzip der Erfindung abgewichen wird.

Die Erfindung schafft somit ein Verfahren zur Steuerung eines Bremsvorgangs an einer fluidgesteuerten Fahrzeugbremse 1 bzw. eine fluidgesteuerte Fahrzeugbremse 1, bei welcher der zur Herstellung des Bremsmoments genutzte Fluiddruck auch zur Rückstellung der Fahrzeugbremse 1 in die Lösestellung genutzt wird. Hierzu wird das Fluid derart von der druckseitigen Kammer 21 in die druckabgewandte Kammer 22 des Bremszylinders 2 übergeführt und vor der Ableitung in die Atmosphäre gedrosselt, daß sich dort ein Staudruck bildet, der das Lösen der Bremse begünstigt. Damit kann das Bremsmoment z. B. im Falle eines Einbruchs der Raddrehzahl sehr schnell abgesenkt werden. Die erfindungsgemäße Fahrzeugbremse 1 eignet sich daher in hervorragender Weise zur Anwendung in Kombination mit ABS-, ASR-, EBS- und/oder ESP-Systemen.

## Patentansprüche

1. Verfahren zur Steuerung eines Bremsvorgangs an einer fluidgesteuerten Fahrzeugbremse (1) mit einer Betätigungseinrichtung, welche auf einen Bremszylinder (2) derart einwirkt, dass dieser eine Bremsvorrichtung betätigt, wobei der Bremszylinder (2) eine druckseitige Kammer (21) und eine druckabgewandte Kammer (22) aufweist, welche durch einen in Richtung zur druckseitigen Kammer (21) zur Rückstellung der Fahrzeugbremse (1) vorgespannten Kolben (23) getrennt sind, und wobei die druckseitige Kammer (21) zur Einleitung des Bremsvorgangs mit Fluid beaufschlagt und das Fluid zum Lösen der Fahrzeugbremse (1) aus der druckseitigen Kammer (21) abgeleitet wird, wobei das Fluid aus der druckseitigen Kammer (21) in die druckabgewandte Kammer (22) geführt und von dort gedrosselt aus dem Bremszylinder (2) abgeleitet wird, **dadurch gekennzeichnet, dass** das Fluid über einen Schalldämpfer (4) aus der druckabgewandten Kammer (22) des Bremszylinders (2) abgeleitet wird.

2. Verfahren nach Anspruch 1, **dadurch gekennzeichnet, dass** das Fluid über ein Stellglied (3) in die druckabgewandte Kammer (22) des Bremszylinders (2) geleitet wird.

3. Fluidgesteuerte Fahrzeugbremse (1) mit einer Betätigungseinrichtung, welche auf einen Bremszylinder (2) derart einwirkt, dass dieser eine Bremsvorrichtung betätigt, wobei der Bremszylinder (2) eine druckseitige Kammer (21) und eine druckabgewandte Kammer (22) aufweist, welche durch einen in Richtung zur druckseitigen Kammer (21) zur Rückstellung der Fahrzeugbremse (1) vorgespannten Kolben (23) getrennt sind, und wobei die druckseitige Kammer (21) zur Einleitung des Bremsvorgangs mit Fluid beaufschlagbar und das Fluid zum Lösen der Fahrzeugbremse (1) aus der druckseitigen Kammer (21) über eine Leitung (5, 6) ableitbar ist, wobei die Leitung (5, 6) aus der druckseitigen Kammer (21) in die druckabgewandte Kammer (22) führt, und dass das Fluid über eine Drosseleinrichtung aus der druckabgewandten Kammer (22) des Bremszylinders (2) ableitbar ist, **dadurch gekennzeichnet, dass** stromab der druckabgewandten Kammer (22) des Bremszylinders (2) ein Schalldämpfer (4) angeordnet ist.

4. Fahrzeugbremse nach Anspruch 3, **dadurch gekennzeichnet, dass** zwischen der druckseitigen Kammer (21) und der druckabgewandten Kammer (22) des Bremszylinders (2) ein Stellglied (3) zum Steuern des Fluidflusses angeordnet ist.

## Claims

1. Method of controlling a braking sequence on a fluid-controlled vehicle brake (1) comprising an actuator means acting upon a brake cylinder (2) in such a manner that the latter operates a braking device, wherein said brake cylinder (2) comprises a pressure-side chamber (21) and a chamber (22) opposite to the pressure side, which chambers are separated by a piston (23) biased in a direction towards said pressure-side chamber (21) for resetting said vehicle brake (1), and said pressure-side chamber (21) is activated by means of a fluid for initiating the braking sequence and said fluid is discharged from said pressure-side chamber (21) for releasing said vehicle brake (1), with said fluid being passed from said pressure-side chamber (21) into said chamber (22) opposite to the pressure side and is discharged from there in a throttled manner out of said brake cylinder (2), **characterised in that** said fluid is discharged from said chamber (22) opposite to the pressure side of said brake cylinder (2) via a silencer (4).

2. Method according to Claim 1, **characterised in that** said fluid is passed into said chamber (22) opposite to the pressure side of said brake cylinder (2) via an actuating element (3).

3. Fluid-controlled vehicle brake (1) comprising an actuator means acting upon a brake cylinder (2) in such a manner that the latter operates a braking device, wherein said brake cylinder (2) comprises a pressure-side chamber (21) and a chamber (22) opposite to the pressure side, which chambers are separated by a piston (23) biased in a direction towards said pressure-side chamber (21) for resetting said vehicle brake (1), and wherein said pressure-side chamber (21) is adapted for being activated by means of a fluid for initiating the braking sequence and provisions are made for discharge of said fluid from said pressure-side chamber (21) via a passage (5, 6) for releasing said vehicle brake (1), with said passage (5, 6) leading out of said pressure-side chamber (21) into said chamber (22) opposite to the pressure side, and wherein said fluid may be discharged via a throttle means from said chamber (22) opposite to the pressure side of said brake cylinder (2), **characterised in that** a silencer (4) is disposed downstream of said chamber (22) opposite to the pressure side of said brake cylinder (2).

4. Vehicle brake according to Claim 3, **characterised in that** an actuating element (3) is arranged between said pressure-side chamber (21) and said chamber (22) opposite to the pressure side of said brake cylinder (2) for controlling the flow of fluid.

## Revendications

1. Procédé à commander l'opération de freinage à un frein de véhicule à commande fluidique (1) comprenant un moyen de commande agissant sur un cylindre de frein (2) d'une telle façon que le dernier commande un dispositif de freinage, dans lequel ledit cylindre de frein (2) comprend une chambre du côté de refoulement (21) et une chambre (22) du côté opposé au côté de refoulement, qui sont séparées l'une de l'autre par un piston (23) mis en précontrainte vers ladite chambre du côté de refoulement (21) afin de rappeler ledit frein de véhicule (1), et ladite chambre du côté de refoulement (21) est activée moyennant un fluide afin d'initier l'opération de freinage et ledit fluide est évacué de ladite chambre du côté de refoulement (21) afin de desserrer ledit frein de véhicule (1),audit fluide étant passé en dehors de ladite chambre du côté de refoulement (21) dans ladite chambre (22) du côté opposé au côté de refoulement et étant évacué de là d'une manière étranglée en dehors dudit cylindre de frein (2), **caractérisé en ce que** ledit fluide est évacué en dehors de ladite chambre (22) du côté opposé au côté de refoulement dudit cylindre de frein (2) via un amortisseur de bruit (4).

2. Procédé selon la revendication 1, **caractérisé en ce que** ledit fluide est passé dans ladite chambre (22) du côté opposé au côté de refoulement dudit cylindre de frein (2) via un organe de commande (3).

3. Frein de véhicule à commande fluidique (1) comprenant un moyen de commande agissant sur un cylindre de frein (2) d'une telle façon que le dernier commande un dispositif de freinage, dans lequel ledit cylindre de frein (2) comprend une chambre du côté de refoulement (21) et une chambre (22) du côté opposé au côté de refoulement, qui sont séparées l'une de l'autre par un piston (23) mis en précontrainte vers ladite chambre du côté de refoulement (21) afin de rappeler ledit frein de véhicule (1), et dans lequel ladite chambre du côté de refoulement (21) est apte à être activée moyennant un fluide afin d'initier l'opération de freinage et des mesures sont prises à évacuer ledit fluide en dehors de ladite chambre du côté de refoulement (21) via un conduit (5, 6) afin de desserrer ledit frein de véhicule (1), audit conduit (5, 6) s'étendant en dehors de ladite chambre du côté de refoulement (21) dans ladite chambre (22) du côté opposé au côté de refoulement, et dans lequel on peut évacuer ledit fluide via un moyen d'étranglement en dehors de ladite chambre (22) du côté opposé au côté de refoulement dudit cylindre de frein (2), **caractérisé en ce qu'**un amortisseur de bruit (4) est disposé en aval de ladite chambre (22) du côté opposé au côté de refoulement dudit cylindre de frein (2).

4. Frein de véhicule selon la revendication 3, **caractérisé en ce qu'**un organe de commande (3) est disposé entre ladite chambre du côté de refoulement (21) et ladite chambre (22) du côté opposé au côté de refoulement dudit cylindre de frein (2) afin de commander l'écoulement du fluide.
